(19) Europäisches Patentamt
European Patent Office
Office européen des brevets

(11) **EP 3 877 673 B1**

(12) **FASCICULE DE BREVET EUROPEEN**

(45) Date de publication et mention
de la délivrance du brevet:
**04.01.2023 Bulletin 2023/01**

(21) Numéro de dépôt: **19806035.2**

(22) Date de dépôt: **18.10.2019**

(51) Classification Internationale des Brevets (IPC):
***F16H 25/22*** *(2006.01)*

(52) Classification Coopérative des Brevets (CPC):
**F16H 25/2252; F16H 55/08;** B60T 8/343;
F16D 2125/40; F16H 1/34

(86) Numéro de dépôt international:
**PCT/FR2019/052472**

(87) Numéro de publication internationale:
**WO 2020/094937 (14.05.2020 Gazette 2020/20)**

(54) **MÉCANISME DE VIS A ROULEAUX SATELLITES**

PLANETENROLLENGEWINDEMECHANISMUS

PLANETARY ROLLER SCREW MECHANISM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.11.2018 FR 1860270**

(43) Date de publication de la demande:
**15.09.2021 Bulletin 2021/37**

(73) Titulaire: **ABEVI, Folly
73000 Chambery (FR)**

(72) Inventeur: **ABEVI, Folly
73000 Chambery (FR)**

(74) Mandataire: **IP Trust
2, rue de Clichy
75009 Paris (FR)**

(56) Documents cités:
**EP-A1- 2 784 350     WO-A1-2017/030471**

**Description**

Domaine technique

L'invention concerne le domaine des mécanismes de vis à rouleaux satellites.

Technique antérieure

Un mécanisme de vis à rouleaux satellites comprend typiquement une vis munie d'un filet externe, un écrou entourant coaxialement la vis et muni d'un filet interne, des rouleaux chacun muni d'un filet externe et interposé entre la vis et l'écrou de sorte que le filet externe du rouleau s'engrène dans le filet externe de la vis et le filet interne de l'écrou, chaque rouleau présentant deux extrémités munies chacune d'une denture externe.
Le mécanisme présente en outre deux dentures de synchronisation coaxiales à la vis et dans lesquelles s'engrènent les dentures externes des rouleaux.
Lorsque la vis tourne autour de son axe par rapport à l'écrou, les rouleaux tournent sur eux-mêmes et les dentures de synchronisation guident les rouleaux dans leurs déplacements de sorte que leurs axes longitudinaux restent parallèles à l'axe longitudinal de la vis.
Le brevet européen EP 2 784 350 B1 divulgue un mécanisme de vis à rouleaux dont les dentures externes des rouleaux présentent, en section transversale, un diamètre extérieur inférieur ou égal à un diamètre de fond du filet externe des rouleaux, les dentures étant donc situées en-dessous des fonds des filets, ce qui évite toute interférence entre les filets et les dentures des rouleaux, mais nécessite des profils de dentures particuliers pour les adapter au diamètre réduit des extrémités des rouleaux.
Dans ce mécanisme, les dentures des rouleaux s'engrènent avec des dentures internes de roues dentées qui constituent les dentures de synchronisation, ces dentures internes comprenant des dents présentant, en section transversale, un flanc de profil convexe et les dentures des rouleaux comprenant des dents présentant, en section transversale, un flanc de profil concave hypo-cycloïdal.
La demande internationale de brevet WO 2017 /030471 décrit un couplage à lanterne-cycloïde bilatéral de deux roues caractérisé en ce que les têtes des dents de chaque roue ont un profil convexe arrondi tandis que les bases des dents de chaque roue possèdent un profil concave trochoïde relié tangentiellement au profil des têtes.

Exposé de l'invention

Le mécanisme du brevet EP 2 784 350 présente un rapport de conduite insuffisant au niveau de l'interface entre les dentures des rouleaux et les dentures de synchronisation, le rapport de conduite caractérisant le nombre de dents en prise les unes avec les autres et devant être élevé pour indiquer une bonne répartition des charges, qui diminue les effets de fatigue sur les dents, les vibrations et le bruit.
Un mécanisme de vis à rouleaux satellites selon l'invention améliore le rapport de conduite à l'interface entre les dentures de rouleaux et les dentures de synchronisation dans un mécanisme évitant le phénomène d'interférence entre les filets et les dentures des rouleaux.
Un mécanisme de vis à rouleaux satellites selon l'invention comprend une vis munie d'un filet externe; un écrou entourant coaxialement la vis et muni d'un filet interne; des rouleaux chacun muni d'un filet externe et interposé entre la vis et l'écrou de sorte que le filet externe du rouleau s'engrène dans le filet externe de la vis et le filet interne de l'écrou, chaque rouleau présentant deux extrémités munies chacune d'une denture externe, chaque denture externe présentant, en section transversale, un diamètre extérieur inférieur ou égal à un diamètre de fond du filet externe des rouleaux; et deux dentures de synchronisation coaxiales à la vis et dans lesquelles s'engrènent les dentures externes des rouleaux, et dans lequel lesdites dentures externes des rouleaux ont des dents avec un flanc présentant, en section transversale, un profil hypo-trochoïdal convexe et lesdites dentures de synchronisation ont des dents avec un flanc présentant, en section transversale, un profil hypo-trochoïdal ou un profil épi-trochoïdal.
Dans un tel mécanisme, basé sur des profils hypo-trochoïdaux, le rapport de conduite est amélioré par rapport au cas où les dentures des rouleaux ont des dents de profil hypo-cycloïdal concave en augmentant le temps où, au cours de la rotation d'un rouleau, au moins une dent de denture du rouleau est en contact avec la denture de synchronisation correspondante, en d'autres termes, en augmentant l'angle balayé par une dent du rouleau entre le début et la fin de son engrènement avec une dent de la denture de synchronisation.
En outre, l'amélioration du rapport de conduite facilite le montage des rouleaux et donc l'assemblage du mécanisme, les rouleaux tenant mieux en place lorsqu'on les positionne dans l'écrou, dans le cas d'une vis à rouleaux standard, ou sur la vis, dans le cas d'une vis à rouleaux inversée.
Un autre avantage du mécanisme proposé est son application possible à des vis à rouleaux satellites, non seulement pour de petites avances, mais également pour de grandes avances, permettant de produire, pour des vis à rouleaux de même conception, une gamme complète d'avances.

Le mécanisme de vis à rouleaux selon l'invention peut avantageusement présenter les caractéristiques suivantes :

- la vis à rouleaux peut être une vis à rouleaux standard et les dentures de synchronisation peuvent être des dentures internes entourant coaxialement la vis et dont les dents ont un flanc présentant, en section transversale, un profil hypo-trochoïdal concave,
- la vis à rouleaux peut être une vis à rouleaux inversée et les dentures de synchronisation peuvent être des dentures externes portées par la vis et dont les dents ont un flanc présentant, en section transversale, un profil épi-trochoïdal convexe,
- les profils peuvent être définis par la trajectoire d'un point lié à un cercle mobile roulant sans glisser sur un cercle directeur, un rapport de la distance du point lié au centre du cercle mobile sur un rayon du cercle mobile peut être compris entre 0,1 et 0,95 ou entre 1,05 et 4, et un rapport d'un rayon du cercle directeur sur un rayon du cercle mobile peut être compris entre 1 et 6, et
- le rapport du rayon du cercle directeur sur le rayon du cercle mobile peut être compris entre 1,7 et 2,5.

L'invention peut s'étendre à un dispositif d'actionnement comprenant un mécanisme de vis à rouleaux satellites monté sur une tige et couplé à un système d'entraînement mécanique ou électromécanique.

Selon l'invention, les profils dits hypo-trochoïdaux ou épi-trochoïdaux comprennent des profils suivant une hypo-trochoïde ou une épi-trochoïde, respectivement, ainsi que des profils en arcs de cercles approximant une hypo-trochoïde ou épi-trochoïde, respectivement.

Description sommaire des dessins

La présente invention sera mieux comprise et d'autres avantages apparaîtront à la lecture de la description détaillée de modes de réalisation pris à titre d'exemples nullement limitatifs et illustrés par les dessins annexés, dans lesquels :

- la figure 1A représente une vue éclatée d'une vis à rouleaux satellites d'un premier mode de l'invention ;
- les figures 1B et 1C représentent respectivement une vue longitudinale et une vue transversale d'un rouleau ;
- la figure 2A représente une portion d'une denture ;
- les figures 2B et 2C représentent respectivement le principe de génération d'une hypo-trochoïde et une hypo-trochoïde ;
- la figure 2D représente un actionneur incorporant la vis à rouleaux satellite de la figure 1A ;
- la figure 3A représente une vue éclatée d'une vis à rouleaux satellites d'un second mode de l'invention ; et
- les figures 3B et 3C représentent respectivement le principe de génération d'une épi-trochoïde et une épi-trochoïde.

Description d'un premier mode de réalisation

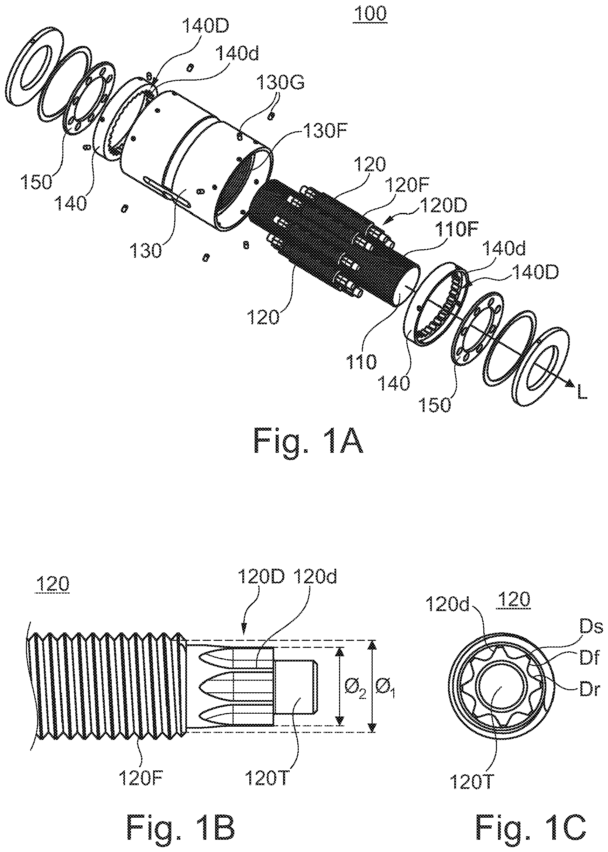

Un premier mode de réalisation de l'invention est décrit à l'aide des figures 1A à 2C.

Comme illustré par les figures 1A à 1C, un mécanisme de vis à rouleaux satellites standard 100 selon un premier mode de réalisation comprend typiquement une vis 110, un écrou 130 disposé autour de la vis coaxialement à celle-ci, et une pluralité de rouleaux 120 interposés entre la vis et l'écrou et d'axes longitudinaux parallèles à celui de la vis.

La vis et les rouleaux sont munis de filetages externes 110F et 120F, respectivement, et l'écrou d'un filetage interne 130F.

Les rouleaux comprennent en outre des dentures externes 120D situées à leurs extrémités et, dans ce mode de réalisation particulier, des tourillons cylindriques lisses 120T prolongeant leurs extrémités.

La figure 1B illustre une extrémité de rouleau, munie d'une denture externe (120D) présentant, en section transversale, un diamètre extérieur ($\emptyset_2$) inférieur ou égal à un diamètre de fond ($\emptyset_1$) du filet externe (120F) des rouleaux.

Les filetages des rouleaux sont destinés à entrer en prise avec les filetages de la vis et de l'écrou.

Un dispositif de maintien et de guidage des rouleaux comprend des porte-rouleaux 150 qui sont montés coaxialement à la vis entre celle-ci et l'écrou, avec des alésages destinés à accueillir les tourillons 120T des rouleaux 120.

Le dispositif de maintien comprend également deux dentures de synchronisation constituées de dentures internes 140D munies de dents 140d situées du côté de l'écrou, coaxiales à la vis et dans lesquelles s'engrènent des dents 120d des dentures externes 120D situées aux extrémités respectives des rouleaux 120.

Les dentures internes 140D, dans ce mode de réalisation particulier, sont montées sur deux couronnes 140 respectives fixées à l'écrou 130 au moyen de goupilles 130G, de sorte que ces dentures internes suivent la périphérie interne de l'écrou et en sont solidaires.

Alternativement, les couronnes pourraient être intégrées dans la masse de l'écrou, ou collées ou fixées par des vis de fixation à celui-ci.

Les filetages des rouleaux ont un angle d'hélice correspondant à celui de l'écrou, de sorte que lorsque la vis est en rotation autour de son axe longitudinal L par rapport à l'écrou, les rouleaux, maintenus par les porte-rouleaux, tournent sur eux-mêmes en se déplaçant en rotation le long de la périphérie interne de l'écrou tout en restant axialement fixes par rapport à celui-ci, l'écrou étant entraîné dans un mouvement de translation.

Les dentures 120D des rouleaux 120 s'engrènent dans les dentures 140D des couronnes 140, les rouleaux sont ainsi guidés par ces dentures, qui assurent le parallélisme des rouleaux avec la vis et la régularité de leur déplacement dans l'écrou.

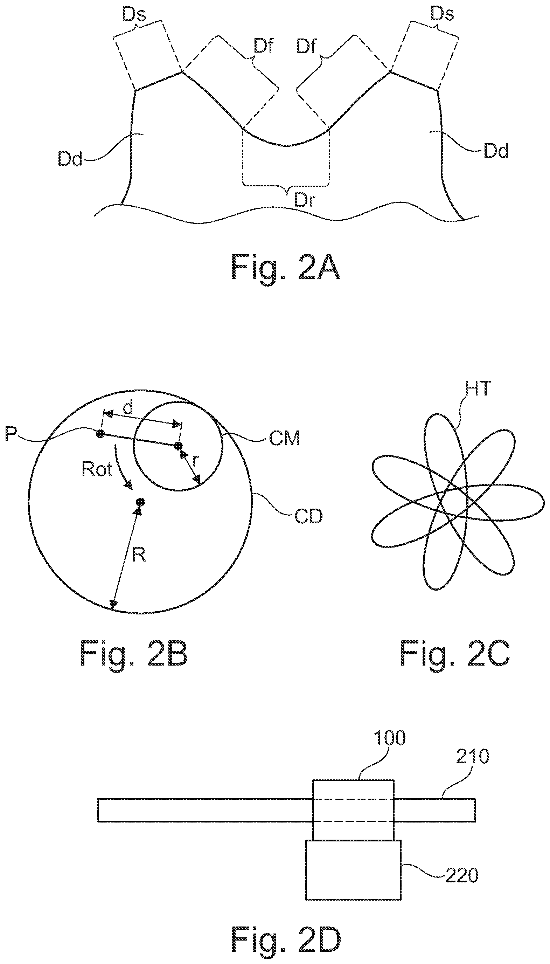

La figure 2A illustre de manière générique une denture D constituée de sommets Ds de dents Dd, de zones de raccord Dr raccordant deux dents Dd contigües au niveau de leurs bases, et de flancs Df de dents chacun liant un sommet Ds à une zone de raccord Dr ; cette constitution s'applique aussi bien aux dentures externes qu'aux dentures internes.

Les sommets Ds et les zones de raccords Dr ne sont pas prévus pour entrer en contact avec d'autres éléments, de sorte qu'ils peuvent avoir des géométries quelconques, tant qu'ils n'interfèrent pas avec le fonctionnement de la vis à rouleaux.

En revanche, les flancs Df des dentures des rouleaux sont destinés à entrer en contact mécanique direct avec les flancs des dentures de synchronisation et, selon l'invention, les dentures des rouleaux ont des flancs de dents qui présentent, en section transversale, un profil hypo-trochoïdal convexe, tandis que les dentures de synchronisation ont des flancs de dents qui peuvent présenter, en section transversale, un profil droit ou concave, mais qui présentent de préférence un profil hypo-trochoïdal concave.

Les profils des flancs des dentures sont définis par des trochoïdes, les sommets Ds et les zones de raccords Dr correspondent à des emplacements de ces trochoïdes qui sont tronqués de manière à ne pas interférer avec le fonctionnement de la vis à rouleaux.

Un profil hypo-trochoïdal est un profil qui suit une hypo-trochoïde, telle l'hypo-trochoïde HT illustrée par la figure 2C, c'est-à-dire une courbe générée par la trajectoire d'un point P lié à un cercle mobile CM de rayon r roulant sans glisser sur, et intérieurement à, un cercle directeur CD de rayon R selon une rotation Rot, le cercle mobile étant plus petit que le cercle directeur, comme illustré par la figure 2B.

L'hypo-trochoïde générée comme expliqué ci-dessus peut être définie par les équations suivantes :

$$\begin{pmatrix} x(\theta) = r(k-1)\cos(\theta) + a \times r\cos((k-1)\theta) \\ y(\theta) = r(k-1)\sin(\theta) - a \times r\sin((k-1)\theta) \end{pmatrix}$$

avec $(x(\theta), y(\theta))$ donnant les coordonnées d'un point M de la courbe hypo-trochoïdale HT, $\theta$ étant un paramètre angulaire compris entre les valeurs $\theta_{min}$ et $\theta_{max}$, a un paramètre représentant le rapport de la distance d du point P au centre du cercle mobile CM sur le rayon r de ce cercle mobile, et le paramètre k valant R/r.

Pour les dentures des rouleaux, les valeurs de k valent $k_{rlx}$ et sont de préférence comprises entre 1 et 6, plus préférablement entre 1,7 et 2,5, et encore plus préférablement entre 1,85 et 2,25, ou bien dans les plages précédentes ayant leurs bornes supérieures limitées à 2, tandis que les valeurs du paramètre a sont comprises entre 0,1 et 0,95 ou entre 1,05 et 4, bornes comprises.

Pour un mécanisme donné selon l'invention, deux courbes hypo-trochoïdales définissant, respectivement, le profil des dents des rouleaux et le profil des dents des dentures de synchronisation internes ont un paramètre a commun, mais des paramètres $k$, $k_{rlx}$ et $k_{ecr}$ respectivement, qui peuvent être distincts et définis par le praticien, avec $k_{ecr}$ étant lié à la valeur $k_{rlx}$ par la relation suivante : $k_{ecr} = k_{rlx} \times (N_{ecr}/N_{rlx})$ où $N_{ecr}$ et $N_{rlx}$ sont, respectivement, le nombre de filets sur l'écrou et le nombre de filets sur les rouleaux, leur rapport étant compris entre 3 et 10, bornes comprises.

Un avantage des profils trochoïdaux, hypo-trochoïdaux ici, avec le paramètre a s'écartant de la valeur 1, est leur adaptabilité à toutes les configurations de dentures de synchronisation, grâce à la possibilité d'ajuster les deux paramètres a et $k_{rlx}$ et d'utiliser des valeurs proches de 2 pour le paramètre $k_{rlx}$, ce dernier point menant à des dents de hauteurs suffisamment élevées pour permettre d'obtenir des rapports de conduite élevés traduisant une bonne fluidité du mouvement d'engrènement des dentures.

Description d'un second mode de réalisation

Un second mode de réalisation de l'invention est décrit à l'aide des figures 1A à 2A et 3A à 3C.

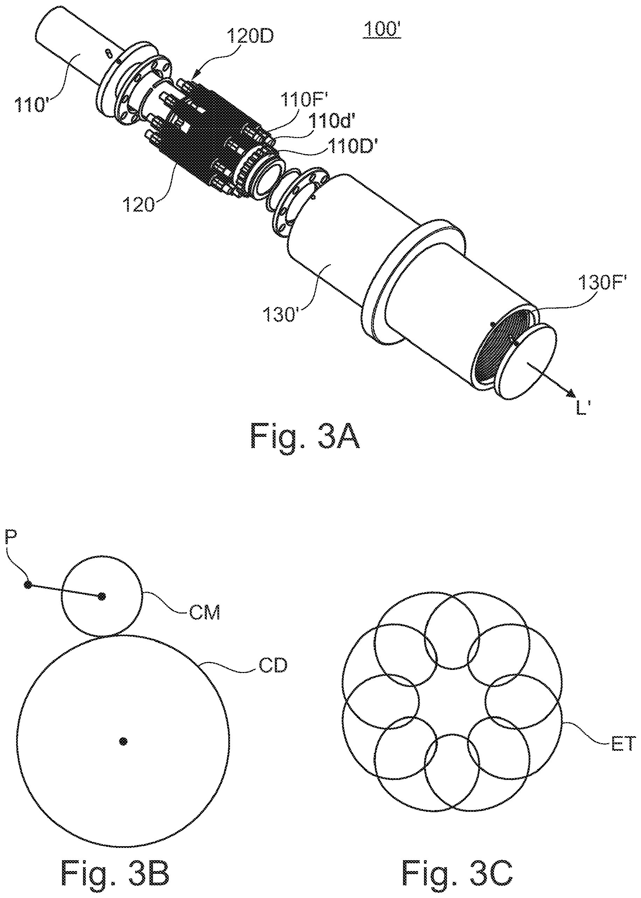

Alors que le premier mode de réalisation traite d'une vis à rouleaux satellites standard 100, le second mode de réalisation traite d'une vis à rouleaux satellites inversée 100' illustrée par la figure 3A, qui repose sur le même principe de fonctionnement que la vis standard, mais dont le système d'écrou est inversé, les couronnes 140 étant éliminées, les dentures internes 140D de synchronisation étant remplacées par des dentures externes 110D' portées par la vis 110', et la vis 110' et l'écrou 130' étant adaptés aux modifications précédentes.

Les dentures externes peuvent être intégrées dans la masse de la vis, ou collées ou fixées par des vis de fixation à celle-ci.

A l'exception des éléments ci-dessus, on peut se référer au premier mode de réalisation quant à la structure générale d'une vis à rouleaux satellites inversée, la structure des rouleaux, et les éléments constitutifs d'une denture et leurs fonctions respectives.

Dans ce second mode de réalisation, lorsque la vis 110' est en rotation autour de son axe longitudinal L' par rapport à l'écrou 130', les rouleaux 120' tournent sur eux-mêmes autour de la vis et se déplacent axialement dans l'écrou.

Les dentures 120D des rouleaux s'engrènent dans les dentures 110D' de la vis, les rouleaux sont ainsi guidés par les dentures de la vis, qui assurent le parallélisme des rouleaux avec la vis et la régularité de leur déplacement autour de la vis.

Dans ce mode de réalisation, selon l'invention, les dentures des rouleaux ont des flancs Df de dents qui présentent, en section transversale, un profil hypo-trochoïdal convexe, tandis que les dentures de synchronisation ont des flancs Df de dents qui présentent, en section transversale, un profil convexe, droit ou concave, mais de préférence un profil épi-trochoïdal convexe.

Le cas des profils hypo-trochoïdaux a été traité dans la description du premier mode de réalisation, auquel on peut se reporter.

Un profil épi-trochoïdal est un profil suivant une épi-trochoïde et illustrée par la figure 3C, c'est-à-dire une courbe générée de la même manière que l'hypo-trochoïde décrite précédemment, mais avec un cercle mobile CM situé à l'extérieur du cercle directeur CD, comme illustrée par la figure 3B.

Comme pour l'hypo-trochoïde, l'équation de l'épi-trochoïde peut s'exprimer par:

$$\begin{pmatrix} x(\theta) = r(k+1)\cos(\theta) - a \times r \cos((k+1)\theta) \\ y(\theta) = r(k+1)\sin(\theta) - a \times r \sin((k+1)\theta) \end{pmatrix}$$

Les valeurs possibles et les valeurs préférentielles des paramètres a et $k_{rlx}$ sont les mêmes que dans le cas du premier mode de réalisation, et le paramètre a est commun au profil des dents des rouleaux et au profil des dents des dentures de synchronisation mais, dans ce second mode de réalisation, les dentures de synchronisation sont externes et ont un paramètre k valant $k_{vis}$, lié à la valeur $k_{rlx}$ par la relation suivante : $k_{vis} = k_{rlx} \times (N_{vis}/N_{rlx})$ où $N_{vis}$ et $N_{rlx}$ sont, respectivement, le nombre de filets sur la vis et le nombre de filets sur les rouleaux, leur rapport étant compris dans une plage allant de 1 à 10, bornes incluses.

Les profils épi-trochoïdaux et hypo-trochoïdaux de ce mode de réalisation apportent les mêmes avantages que les profils hypo-trochoïdaux du premier mode de réalisation, en particulier en ce qui concerne les rapports de conduite.

Exemples numériques

Le tableau 1 ci-dessous compare les rapports de conduites d'interface entre les dentures des rouleaux et les dentures de synchronisation des premier et second modes de réalisation (vis standard et vis inversée), et d'autre part pour des dentures identiques sauf en ce qui concerne les profils des dents, cycloïdaux (cas particulier d'une trochoïde où le paramètre a vaut 1), pour un paramètre $k_{rlx}$ fixé à 2.

Les rapports de conduite se calculent à partir du nombre de filets de l'écrou (vis standard) ou de la vis (vis inversée), et du pas maximum, du rayon primitif et du nombre de dents des rouleaux, valeurs fixées respectivement à 5, 3, 4mm, 5mm et 10 pour toutes les configurations du tableau.

Il est à noter que fixer $k_{rlx}$ à 2 revient à choisir une valeur théorique de $k_{rlx}$ inutilisable en pratique pour le cas des cycloïdes du fait que, dans celles-ci, les épaisseurs des dents diminuent lorsque $k_{rlx}$ se rapproche de 2 et deviennent nulles à cette valeur, mais permet une bonne comparaison avec le cas trochoïdal de l'invention sur la plage de valeurs du paramètre a du tableau : cette valeur est la plus favorable pour obtenir un haut rapport de conduite dans le cas de profils cycloïdaux.

Sur l'ensemble de la gamme de valeurs considérée, les rapports de conduite sont meilleurs pour les dentures de type trochoïdal que pour les dentures de type cycloïdal, et cette constatation peut se généraliser aux autres valeurs du paramètre a pour peu que le nombre de dents des rouleaux soit adapté.

Tableau 1

| | | Paramètre a | | | |
|---|---|---|---|---|---|
| Type vis | Type denture | 1,6 | 1,8 | 2,0 | 2,2 |

(suite)

| | | Paramètre a | | | |
|---|---|---|---|---|---|
| Inversée | Trochoïdale | 0,71 | 0,78 | 0,87 | 1,00 |
| | Cycloïdale | 0,63 | 0,63 | 0,63 | 0,63 |
| Standard | Trochoïdale | 0,87 | 0,94 | 1,06 | 1,39 |
| | Cycloïdale | 0,84 | 0,84 | 0,84 | 0,84 |

Les dentures hypo-trochoïdales et les dentures épitrochoïdales peuvent être fabriquées par une technique d'enlèvement de matière telle que l'usinage ou la rectification, par une technique de déformation telle que le roulage, ou par une technique d'addition de matière telle que le frittage de poudre ou l'impression.

Un actionneur schématisé en figure 2D met à profit le mécanisme de vis à rouleaux satellites 100 décrit plus haut, solidaire d'une tige 210, qui peut être constituée par la vis 110, et couplé à un système d'entraînement mécanique ou électromécanique 220, par exemple pour former un vérin mécanique, mais il est également possible d'utiliser le mécanisme 100' à la place du mécanisme 100.

## Revendications

1. Mécanisme (100;100') de vis à rouleaux satellites comprenant une vis (110;110') munie d'un filet externe (110F;110'F); un écrou (130;130') entourant coaxialement la vis et muni d'un filet interne (130F;130'F); des rouleaux (120) chacun muni d'un filet externe (120F) et interposé entre la vis et l'écrou de sorte que le filet externe du rouleau s'engrène dans le filet externe de la vis et le filet interne de l'écrou, chaque rouleau présentant deux extrémités munies chacune d'une denture externe (120D), chaque denture externe présentant, en section transversale, un diamètre extérieur ($\varnothing_2$) inférieur ou égal à un diamètre de fond ($\varnothing_1$) du filet externe des rouleaux; et deux dentures de synchronisation (140D;110D') coaxiales à la vis et dans lesquelles s'engrènent les dentures externes des rouleaux, **caractérisé en ce que** lesdites dentures externes des rouleaux ont des dents (120d) avec un flanc présentant, en section transversale, un profil hypo-trochoïdal convexe et lesdites dentures de synchronisation ont des dents (140d;140d') avec un flanc présentant, en section transversale, un profil hypo-trochoïdal ou un profil épi-trochoïdal.

2. Le mécanisme de vis à rouleaux satellites selon la revendication 1, **caractérisé en ce que** la vis à rouleaux est une vis à rouleaux standard (100) et les dentures de synchronisation sont des dentures internes entourant coaxialement la vis et dont les dents (140d) ont un flanc (Df) présentant, en section transversale, un profil hypo-trochoïdal concave.

3. Le mécanisme de vis à rouleaux satellites selon la revendication 1, **caractérisé en ce que** la vis à rouleaux est une vis à rouleaux inversée (100') et les dentures de synchronisation sont des dentures externes portées par la vis et dont les dents (110d') ont un flanc (Df) présentant, en section transversale, un profil épi-trochoïdal convexe.

4. Le mécanisme de vis à rouleaux satellites selon l'une quelconque des revendications précédentes, **caractérisé en ce que** les profils sont définis par la trajectoire d'un point lié à un cercle mobile (CM) roulant sans glisser sur un cercle directeur (CD), **en ce qu'**un rapport de la distance (d) du point lié au centre du cercle mobile sur un rayon (r) du cercle mobile (CM) est compris entre 0,1 et 0,95 ou entre 1,05 et 4, et **en ce qu'**un rapport (k) d'un rayon (R) du cercle directeur sur un rayon (r) du cercle mobile est compris entre 1 et 6.

5. Le mécanisme de vis à rouleaux selon la revendication 4, **caractérisé en ce que** le rapport (k) du rayon (R) du cercle directeur sur le rayon (r) du cercle mobile est compris entre 1,7 et 2,5.

6. Dispositif d'actionnement **caractérisé en ce qu'**il comprend un mécanisme de vis à rouleaux satellites (100, 100') selon l'une quelconque des revendications précédentes, monté sur une tige (210) et couplé à un système d'entraînement mécanique (220).

## Patentansprüche

1. Planetenrollengewindetriebmechanismus (100; 100'), umfassend eine Schraube (110; 110'), die mit einem Außengewindegang (110F; 110'F) versehen ist; eine Mutter (130; 130'), die die Schraube koaxial umgibt und mit einem Innengewindegang (130F; 130'F) versehen ist; Rollen (120), die jeweils mit einem Außengewindegang (120F) versehen und zwischen der Schraube und der Mutter so angeordnet sind, dass der Außengewindegang der Rolle in den Außengewindegang der Schraube und den Innengewindegang der Mutter eingreift, wobei jede Rolle zwei Enden aufweist, die jeweils mit einer Außenverzahnung (120D) versehen sind, jede Außenverzahnung einen äußeren Querschnittsdurchmesser ($\varnothing_2$) aufweist, der kleiner als oder gleich einem Bodendurchmesser ($\varnothing_1$) des Außengewindegangs der Rollen ist; und zwei Synchronisationsverzahnungen (140D; 110D'), die koaxial zu der Schraube sind und in die die Außenverzahnungen der Rollen eingreifen, **dadurch gekennzeichnet, dass** die Außenverzahnungen der Rollen Zähne (120d) mit einem Flansch besitzen, der ein konvexes hypotrochoidales Querschnittsprofil aufweist, und die Synchronisationsverzahnungen Zähne (140d; 140d') mit einem Flansch besitzen, der ein hypotrochoidales Querschnittsprofil oder ein epitrochoidales Querschnittsprofil aufweist.

2. Planetenrollengewindetriebmechanismus nach Anspruch 1, **dadurch gekennzeichnet, dass** die Rollenschraube eine Standardrollenschraube (100) ist und die Synchronisationsverzahnungen Innenzähne sind, die die Schraube koaxial umgeben und deren Zähne (140d) einen Flansch (Df) besitzen, der ein konkaves hypotrochoidales Querschnittsprofil aufweist.

3. Planetenrollengewindetriebmechanismus nach Anspruch 1, **dadurch gekennzeichnet, dass** die Rollenschraube eine umgekehrte Rollenschraube (100') ist und die Synchronisationsverzahnungen Außenzähne sind, die durch die Schraube getragen werden und deren Zähne (110d') einen Flansch (Df) besitzen, der ein konvexes epitrochoidales Querschnittsprofil aufweist.

4. Planetenrollengewindetriebmechanismus nach einem der vorstehenden Ansprüche, **dadurch gekennzeichnet, dass** die Profile durch die Bahn eines Punkts definiert sind, der mit einem bewegbaren Kreis (CM) verbunden ist, der ohne Schlupf auf einem Leitkreis (CD) rollt, dass ein Verhältnis des Abstands (d) des Punkts, der mit der Mitte des bewegbaren Kreises verbunden ist, zu einem Radius (r) des bewegbaren Kreises (CM) zwischen 0,1 und 0,95 oder zwischen 1,05 und 4 liegt, und dass ein Verhältnis (k) eines Radius (R) des Leitkreises zu einem Radius (r) des bewegbaren Kreises zwischen 1 und 6 liegt.

5. Rollengewindetriebmechanismus nach Anspruch 4, **dadurch gekennzeichnet, dass** das Verhältnis (k) des Radius (R) des Leitkreises zu dem Radius (r) des bewegbaren Kreises zwischen 1,7 und 2,5 liegt.

6. Betätigungsvorrichtung, **dadurch gekennzeichnet, dass** sie einen Planetenrollengewindetriebmechanismus (100, 100') nach einem der vorstehenden Ansprüche umfasst, der auf einem Stift (210) montiert und mit einem mechanischen Antriebssystem (220) gekoppelt ist.

**Claims**

1. Planetary roller screw mechanism (100; 100') comprising: a screw (110; 110') provided with an external thread (110F; 110'F); a nut (130; 130') coaxially surrounding the screw and provided with an internal thread (130F; 130'F); rollers (120) each provided with an external thread (120F) and positioned between the screw and the nut so that the external thread of the roller meshes with the external thread of the screw and the internal thread of the nut, each roller having two ends each provided with an external toothing (120D), each external toothing having, in cross section, an outer diameter ($\varnothing_2$) less than or equal to a bottom diameter ($\varnothing_1$) of the external thread of the rollers; and two synchronization toothings (140D; 110D') which are coaxial with the screw and in which the external toothings of the rollers mesh, **characterized in that** said external toothings of the rollers have teeth (120d) with a flank having, in cross section, a convex hypotrochoidal profile, and said synchronization toothings have teeth (140d; 140d') with a flank having, in cross section, a hypotrochoidal profile or an epitrochoidal profile.

2. Planetary roller screw mechanism according to claim 1, **characterized in that** the roller screw is a standard roller screw (100) and the synchronization toothings are internal toothings which coaxially surround the screw and of which the teeth (140d) have a flank (Df) having, in cross section, a concave hypotrochoidal profile.

3. Planetary roller screw mechanism according to claim 1, **characterized in that** the roller screw is an inverted roller screw (100') and the synchronization toothings are external toothings which are carried by the screw and of which the teeth (110d') have a flank (Df) having, in cross section, a convex epitrochoidal profile.

4. Planetary roller screw mechanism according to any of the preceding claims, **characterized in that** the profiles are defined by the trajectory of a point linked to a moving circle (CM) rolling without slipping on a directing circle (CD), **in that** a ratio of the distance (d) of the point linked to the center of the moving circle to a radius (r) of the moving circle (CM) is between 0.1 and 0.95 or between 1.05 and 4, and **in that** a ratio (k) of a radius (R) of the directing circle to a radius (r) of the moving circle is between 1 and 6.

5. Roller screw mechanism according to claim 4, **characterized in that** the ratio (k) of the radius (R) of the directing circle to the radius (r) of the moving circle is between 1.7 and 2.5.

6. Actuating device, **characterized in that** it comprises a satellite roller screw mechanism (100, 100') according to any of the preceding claims, which mechanism is mounted on a rod (210) and coupled to a mechanical drive system (220).

Fig. 1A

Fig. 1B

Fig. 1C

Fig. 2A

Fig. 2B

Fig. 2C

Fig. 2D

Fig. 3A

Fig. 3B

Fig. 3C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2784350 B1
- WO 2017030471 A
- EP 2784350 A